# EUROPEAN PATENT APPLICATION

(11) **EP 4 156 149 A1**
(43) Date of publication of application: **29.03.2023**
(21) Application number: 21199003.1
(22) Date of filing: 24.09.2021
(51) Int. Cl.: G09B 23/28

(54) **TRAINING SYSTEM FOR TRAINING A PERSON IN CARRYING OUT AN ENDOSCOPIC PROCEDURE**

(71) Applicant: Universitätsklinikum Hamburg-Eppendorf (UKE), 20246 Hamburg (DE)
(72) Inventor: Schmitz, Rüdiger, 20251 Hamburg (DE); Ehlken, Hanno, 22419 Hamburg (DE)
(74) Representative: Eisenführ Speiser

(57) **Abstract**

The invention relates to a training system 1 for training a person in carrying out an endoscopic procedure. An endoscope 6 is introduced into an anatomical model 2 and configured to generate a real endoscopic image of the inside of the anatomical model. An image generation apparatus 7, which generates an artificial endoscopic image, comprises provides a) a generative model which has been trained with training data sets including real endoscopic images of the inside of the anatomical model and real endoscopic images of the inside of real patients such that the trained generative model provides, as an output, an artificial endoscopic image, if it is provided, as an input, with a real endoscopic image of the inside of the anatomical model, and b) determines an artificial endoscopic image based on a real endoscopic image generated by the endoscope and the generative model, which is shown on a display 5.

## Description

### FIELD OF THE INVENTION

The invention relates to a training system, a training method and a training computer program for training a person in carrying out an endoscopic procedure. Moreover, the invention relates to an image generation apparatus and an anatomical model of the training system.

### BACKGROUND OF THE INVENTION

Typically, persons are trained in carrying out an endoscopic procedure by introducing an endoscope into an anatomical model made of silicon and/or rubber. Correspondingly, an endoscopic image generated by the endoscope during the training is unrealistic, thereby reducing the value of such a training.

### FIELD OF THE INVENTION

It is an object of the present invention to provide a training system, a training method and a training computer program for training a person in carrying out an endoscopic procedure, which allows to increase the quality of the training. It is a further object of the present invention to provide an image generation apparatus and an anatomical model of such a training system.

In a first aspect of the present invention a training system for training a person in carrying out an endoscopic procedure is presented, wherein the training system comprises:
- an anatomical model in which an endoscope is introducible,
- an endoscope to be introduced into the anatomical model and configured to generate a real endoscopic image of the inside of the anatomical model,
- an image generation apparatus configured to generate an artificial endoscopic image, the image generation apparatus comprising:
- a generative model providing unit for providing a generative model which has been trained with training data sets including real endoscopic images of the inside of the anatomical model and real endoscopic images of the inside of real patients such that the trained generative model provides, as an output, an artificial endoscopic image, if it is provided, as an input, with a real endoscopic image of the inside of the anatomical model,
- an image determination unit configured to determine an artificial endoscopic image based on a real endoscopic image generated by the endoscope and the provided generative model,
- a display configured to show the determined artificial endoscopic image to the person.

Since the generative model has been trained with training data sets including real endoscopic images of the inside of the anatomical model and real endoscopic images of the inside of real patients, the generative model can provide artificial endoscopic images, if it is provided, as an input, with a real endoscopic image of the inside of the anatomical model, wherein the artificial endoscopic image appears more like an endoscopic image of a real patient. By showing during the training of the person carrying out an endoscopic procedure endoscopic images which look more like endoscopic images of real patients, although in fact the endoscope is still navigated through the inside of the anatomical model and hence not through a real patient, the quality of the training of the person can be increased.

The generative model providing unit can be a storage in which the trained generative model has been stored and from which it can be retrieved for providing the same. The generative model providing unit can also be a receiving unit for receiving the generative model from another device and to provide the received the generative model. The generative model providing unit can also be configured to train an initially untrained generative model or to further train an already trained generative model based on the training data sets.

The anatomical model preferentially is a gastrointestinal model to be used for training the person in gastrointestinal endoscopy. In an embodiment, the anatomical model is a model to be used for training in esophagogastroduodenoscopy, i.e. for training the endoscopic examination of especially the esophagus, the stomach and the duodenum. Moreover, in an embodiment the anatomical model is a model to be used for training in colonoscopy. Thus, the anatomical model might also model the rectum and the intestine. Moreover, the anatomical model can comprise rubber and/or silicone. The anatomical model also can comprise other materials like plastic.

Preferentially, the generative model providing unit is configured to use a generative model that has been trained as a generator of a generative adversarial network (GAN), wherein the GAN uses, besides the generator, one or several discriminators. If one discriminator is used for the training, the discriminator can be a single classification model or a combination of independent classification models. The classification model preferentially is a neural network. Thus, preferentially, the generator and the one or more discriminators are neural networks, wherein the one or more discriminators are networks configured to distinguish between real endoscopic images of the inside of the anatomical model and determined artificial endoscopic images. The neural network of the generator has been trained to generate an artificial endoscopic image based on a real endoscopic image of the inside of the anatomical model. It has been found that, if the generative model is trained by using a GAN, the generated artificial endoscopic images appear even more like endoscopic images of real patients such that the value of the training of the person in carrying out an endoscopic procedure can be further increased.

In an embodiment, both or either/any of the generator and the discriminator(s) can be a deep convolutional neural network (CNN). In particular, it can comprise 2d- or 3d-CNN architectures - including fully convolutional neural nets (FCNs) - with, optionally, recurrent (RNN) - including Long short-term memory (LSTM) - gated recurrent (GRU), or transformer blocks. The generator's inputs may comprise (a) the current frame of an input video stream, if the images are considered over time as it is generally the case, (b) former frames of the input video stream, (c) former frames of the output video stream, (d) further parameters as used for conditional GAN architectures, which may include discrete or continuous labels or binary mask to guide the intended output. For the discriminator, (a) the current frame as well as (b) former frames of the generator's output video stream or an original patient video, (c) further parameters as used for conditional GAN architectures, as detailed before.

It is further preferred that the one or several discriminators include at least one temporal discriminator. A temporal discriminator is a discriminator which uses several images of a sequence of images for distinguishing between real endoscopic images of the inside of the anatomical model and determined artificial endoscopic images. By using a temporal discriminator, the quality of the discrimination and hence of the generator of the GAN forming the generative model can be improved, which in turn allows for artificial endoscopic images looking even more like endoscopic images of real patients. This allows for a further increased quality of training a person in carrying out an endoscopic procedure.

Preferentially, the image determination unit is configured to determine the artificial endoscopic image based on the endoscopic model such that the determined artificial endoscopic image has the same viewing direction as the real endoscopic image. In order to achieve this, the generative model can be trained with images having the same viewing direction. However, this can also be achieved, if the generative model is trained with images not having the same viewing direction, as it is usually the case, if, for instance, a cycleGAN is used for the training.

In an embodiment the generative model providing unit is configured to use different generative models for different region complexes within the anatomical model such that, if the real endoscopic image shows a certain region complex of the anatomical model, the image determination unit uses the generative model, which corresponds to the certain region complex, for the determination of the artificial endoscopic image. A region complex can include one anatomical region or several subsequent anatomical regions, wherein at least some region complexes can be overlapping. For instance, the region complexes can include at least one of a) mouth cavity, b) larynx and esophagus, c) esophagus, d) esophagus and stomach, e) stomach and duodenum and f) duodenum. By using different generative models for different region complexes, the respective generative model can be specific for the respective region complex, which can allow for an improved training experience.

In an embodiment the generative model providing unit is configured to use different generative models for different scenarios to be shown in the determined artificial endoscopic image, wherein the image generation apparatus further comprises a user interface allowing a user to choose a desired scenario, wherein the image determination unit is configured to use the generative model, which corresponds to the selected scenario, for the determination of the artificial endoscopic image. Preferentially, the scenarios refer to different pathologies. This allows to train the person in different scenarios, in particular in different pathologies with the same anatomical model, especially without modifying the anatomical model itself. It is even possible that for each region and for each scenario a respective generative model is provided such that for different regions it can be trained with different scenarios and it is also possible that for a same region it is trained with different scenarios, particularly with different pathologies.

In an embodiment, one or several generative models are used for multiple target scenarios, which are then further specified as another input parameter as in the sense of conditional GANs.

In an embodiment the training data sets, with which the generative model has been trained, also include image sharpness indicators being indicative of a degree of image sharpness of the respect real endoscopic image such that the trained generative model provides, as an output, an artificial endoscopic image, if it is provided, as an input, with a real endoscopic image of the inside of the anatomical model and the image sharpness indicator of the real endoscopic image, wherein the image determination unit is configured to determine an image sharpness indicator of the real endoscopic image and to determine the artificial endoscopic image based on the real endoscopic image generated by the endoscope, the determined image sharpness indicator and the provided generative model. This can lead to artificial endoscopic images which are similar to the initial real endoscopic images with respect to the image sharpness. The image sharpness can be related to the velocity of navigating the endoscopic within the anatomical model, i.e. the larger this velocity, the lower might be the image sharpness.

In an embodiment the anatomical model comprises different colors for indicating different anatomical regions. These colors are preferentially discrete colors, wherein different anatomical regions comprise different discrete colors. By using the different colors for the different anatomical regions, the generative model can better distinguish between the different anatomical regions and region complexes. In particular, the image determination unit can be configured to firstly determine the respective region complex based on the respective real endoscopic image, especially based on the colors in the real endoscopic image, whereafter the image determination unit can use a generative model trained for the respective region complex for generating the artificial endoscopic image. Thus, in a preferred embodiment the image determination unit includes assignments between colors of the real endoscopic image and anatomical regions or region complexes and these assignments are used for determining the respective anatomical region or region complex, respectively, shown in the respective real endoscopic image of the inside of the anatomical model. The image determination unit can be configured to determine the anatomical region or region complex shown in the respective real endoscopic image also if the different anatomical regions are not color coded. Thus, it is even possible to use a standard anatomical model without such a color coding. The image determination unit can comprise a correspondingly trained classifier, which could also be named anatomical region classification module, for determining the respective anatomical region or region complex based on the respective real endoscopic image, even if the anatomical model and hence the real endoscopic image is not color coded. Also this classifier can be a machine learning classifier like a neural network, but also another classifier.

In an embodiment the anatomical model comprises colors for indicating a distance to an entrance into the anatomical model. In particular, the colors indicate a distance to a row of teeth of the anatomical model. The colors can form a continuous color gradient for indicating the distance. Preferentially the image generation unit also is adapted to determine the distance between the entrance into the anatomical model and positions on the real endoscopic image based on the respective color, especially based on the respective color gradient. Moreover, the image generation unit can be configured to use this distance information for adding specific elements to the generated artificial endoscopic image at predefined locations. For instance, the image generation unit can be configured to add a lesion at a certain location in the anatomical model and hence in the artificial endoscopic image based on the determined distance. The locations at which the element like the lesion should be present in the artificial endoscopic image can be predefined by, for instance, a user by using a user interface. By allowing to add elements like lesions into the artificial endoscopic images, the quality of the training of the person in carrying out an endoscopic procedure can be even further increased.

In an embodiment a respective color indicating a respective anatomical region is formed as a color gradient for indicating the distance. Thus, it is possible that the anatomical model has a sequence of color gradients, i.e. a respective color gradient for a respective anatomical region. This allows to use the color in a respective anatomical region for indicating the respective anatomical region and also for indicating a distance, thereby allowing to accurately determine the respective anatomical region or region complex shown in the respective real endoscopic image of the inside of the anatomical model and to accurately add an element like a lesion at a desired location within the respective artificial endoscopic image.

Also, this can allow for an improved quality of training the person in carrying out the endoscopic procedure.

In a further aspect of the present invention an image generation apparatus configured to generate an artificial endoscopic image and to be used together with an anatomical model as defined by claim 13 and an endoscope for forming a training system as defined by claim 1 is presented, wherein the image generation apparatus comprises:
- a generative model providing unit for providing a generative model which has been trained with training data sets including real endoscopic images of the inside of the anatomical model and real endoscopic images of the inside of real patients such that the trained generative model provides, as an output, an artificial endoscopic image, if it is provided, as an input, with a real endoscopic image of the inside of the anatomical model, and
- an image determination unit configured to determine an artificial endoscopic image based on a real endoscopic image generated by the endoscope and the provided generative model,

The invention relates further to a machine learning apparatus for training a generative model to be used by the training system of claim 1 and the image generation apparatus as defined by claim 11 by machine learning, wherein the machine learning apparatus is configured to use a generator and a discriminator for the training, wherein the generative model to be trained is used as the generator.

In another aspect of the present invention an anatomical model is presented in which an endoscope is introducible and which configured to be used together with an image generation apparatus as defined by claim 11 for forming a training system as defined by claim 1.

In a further aspect of the present invention a training method for training a person in carrying out an endoscopic procedure is presented, wherein the training method comprises:
- providing a generative model which has been trained with training data sets including real endoscopic images of the inside of an anatomical model and real endoscopic images of the inside of real patients such that the trained generative model provides, as an output, an artificial endoscopic image, if it is provided, as an input, with a real endoscopic image of the inside of the anatomical model, by a generative model providing unit,
- determining an artificial endoscopic image based on a real endoscopic image generated by an endoscope introduced into an anatomical model and the provided generative model by an image determination unit.

The invention relates further to a machine learning method for training a generative model to be used by the training system of claim 1 and the image generation apparatus as defined by claim 11 by machine learning, wherein the machine learning method is configured to use a generator and a discriminator for the training, wherein the generative model to be trained is used as the generator. In another aspect of the present invention a training computer program for training a person in carrying out an endoscopic procedure is presented, wherein the training computer program comprises program code means configured to cause an image generation apparatus as defined by claim 12 to carry out the training method as defined by claim 14, if the training computer program is run on the image generation apparatus.

In another aspect of the present invention a machine learning computer program fortraining a generative model to be used by the training system of claim 1 and the image generation apparatus as defined by claim 11 by machine learning is presented, wherein the machine learning computer program comprises program code means configured to cause a machine learning apparatus as defined by claim 12 to carry out the machine learning method, if the machine learning computer program is run on the machine learning apparatus.

It shall be understood that the training system of claim 1, the image generation apparatus of claim 11, the machine learning apparatus of claim 13, the anatomical model of claim 13, the training method of claim 14, the machine learning method, the training computer program of claim 15, and the machine learning computer program, have similar and/or identical preferred embodiments, in particular, as defined in the dependent claims.

It shall be understood that a preferred embodiment of the present invention can also be any combination of the dependent claims or above embodiments with the respective independent claim.

### BRIEF DESCRIPTION OF THE DRAWINGS

These and other aspects of the invention will be apparent from and elucidated with reference to the embodiments described hereinafter. In the following drawings:
- Fig. 1: shows schematically and exemplarily an embodiment of a training system for training a person in carrying out an endoscopic procedure and
- Fig. 2: shows a flowchart exemplarily illustrating an embodiment of a training method for training a person in carrying out an endoscopic procedure.

### DETAILED DESCRIPTION OF EMBODIMENTS

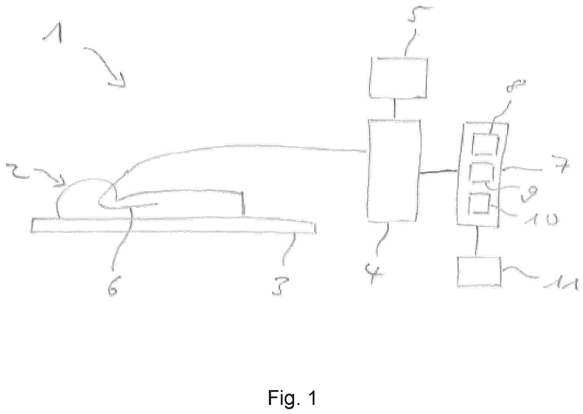

Fig. 1 shows schematically and exemplary an embodiment of a training system for training a person in carrying out an endoscopic procedure. The training system 1 comprises an anatomical model 2 in which an endoscope 6 is introducible. In this embodiment the anatomical model 2 is located on a support means 3 like a table. The endoscope 6 is configured to generate a real endoscopic image of the inside of the anatomical model. It is connected to an endoscope supply unit 4 comprising, for instance, an image processor, a light source, a suctioning device, a flushing device, et cetera. In this embodiment the different components of the endoscope supply unit 4 are arranged such that the endoscope supply unit 4 appears tower like. The endoscope supply unit 4 therefore could also be regarded as being an endoscopy tower.

The training system 1 further comprises an image generation apparatus 7 configured to generate an artificial endoscopic image which looks more like an endoscopic image of a real patient in comparison to the real endoscopic image of the inside of the anatomical model. The image generation apparatus 7 comprises a generative model providing unit 8 for providing a generative model which has been trained with training data sets including real endoscopic images of the inside of the anatomical model and real endoscopic images of the inside of real patients such that the trained generative model provides, as an output, an artificial endoscopic image, if it is provided, as an input, with a real endoscopic image of the inside of the anatomical model. In this embodiment the generative model providing unit is configured to use a generative model that has been trained by using a GAN. However, in another embodiment, the generative model can be trained in another way. The GAN comprises a generator being the generative model to be trained and a discriminator, wherein in this embodiment the discriminator is a temporal discriminator. In another embodiment also several discriminators can be used for the training. The temporal discriminator uses several images of a sequence of images for distinguishing between real endoscopic images of the inside of the anatomical model and determined artificial endoscopic images. In particular, temporal inconsistency indicates an artificial organ of the respective sequence of images, because obviously they were not acquired by using the endoscope, but by using the generator. A temporal inconsistency can be detected by, for instance, a structural change of a mucosa from image to image.

As said before, a discriminator comprises a model, preferentially a deep neural net, including CNN architectures and, optionally, RNN, GRU, LSTM or transformer blocks, which may process a set of the inputs as detailed before: (a) the current frame as well as (b) former frames of the generator's output video stream or an original patient video, (c) further parameters as used for conditional GAN architectures, as detailed before. It outputs a classification whether the inputted framed is believed to belong to a synthetic video (i.e. created by the generative model) or to a real patient video.

Specific discriminators can hence be used to suppress specific aspects which let the generated video appear unnatural.

In particular, a discriminator which processes the current plus a number of frames directly proceeding it, can use unnatural flickering or change of the mucosal appearance for the detection of synthetic data, which results in the former to be suppressed in the generator.

A discriminator, which also considers earlier frames, can detect temporal inconsistencies on a longertime scale. In particular, classification of the region complex and/or the distance along the GI tract allows to input earlier frames of the same region complex and/or position to the discriminator (and the generator) with the aim that inconsistencies between different visits of the same region complex and/or position are detected by the discriminator, hence avoided by the generative model.

The generator's inputs may comprise (a) the current frame of the input video stream, (b) former frames of the input video stream, (c) former frames of the output video stream, (d) further parameters as used for conditional GAN architectures, which may include discrete or continuous labels or a binary mask to guide the intended output. The latter my include (i) continuous or discrete labels describing the motion and/or defocusing blur of the input frame and/or former frames; (ii) further parameters which are deduced from the input video and used to describe its appearance; (iii) the region complex as classified by a corresponding preprocessing unit; (iv) the estimated position inside the anatomical model as deduced from the color gradient(s); (v) parameters which are directly related to the user input, e.g. the selection of pathologic target lesion(s) that shall be generated, (vi) parameters which are computed from the user input combined with (iii) and (iv), in particular (vi-a) binary labels which signal whether the current region complex and or position shall host a target lesion, (vi-b) binary masks which are computed from (iii) and (iv) and are used as constraints to where the generative model may place a target lesion.

As described before, the discriminator(s) may receive as input the same data but with the frames sampled form either the generator's output video stream or original patient videos. Multiple discriminators may either be combined to yield a single classification or used individually.

Generator and discriminator(s) are then trained in an alternating fashion and, typically, in a variation of a minmax game of two or multiple agents comprising the generative model and the discriminator(s), and with the inputs as described above. A second ("inverse") generator, which aims to translate the generated video back to the original image domain plus a function that measures consistency of the inverse generator's output with the original generator input may be used to force the generative model to retain the original video perspective and the full video information. This in particular includes the original cycleGAN-architecture plus variations of it.

The training system 1 further comprises an image determination unit 9 configured to determine an artificial endoscopic image based on a real endoscopic image generated by the endoscope 6 and the provided generative model. Moreover, the training system 1 comprises a display configured to show the determined artificial endoscopic image to the person to be trained. The image determination unit 9 is configured to determine the artificial endoscopic image based on the endoscopic model such that the determined artificial endoscopic image has a viewing direction being the same as the viewing direction of the real endoscopic image. This can be achieved, as explained above, by using, for instance, cycle GAN for the training.

The generative model providing unit 8 can be configured to use different generative models for different region complexes within the anatomical model 2 such that, if the real endoscopic image shows a certain region complex of the anatomical model 2, the image determination unit 9 uses the generative model, which corresponds to the certain region complex, for the determination of the artificial endoscopic image. The region complexes can be overlapping and comprise one or several subsequent anatomical regions. For instance, in an embodiment the region complexes include the mouth cavity, the larynx and esophagus, the esophagus, the esophagus and stomach, the stomach and duodenum and the duodenum. Thus, in this example there are six different region complexes. Moreover, the anatomical model 2 can comprise different colors for indicating different anatomical regions. In particular, different anatomical structures can be provided with different discrete colors.

Moreover, the generative model providing unit 8 can be configured to use different generative models for different scenarios to be shown in the artificial endoscopic image. The image generation apparatus 7 can further comprise a user interface 10 allowing a user to choose a desired scenario via an input unit 11 like a keyboard, a computer mouse, a touch screen et cetera, wherein the image generation unit 9 can be configured to use a generative model, which corresponds to the selected scenario, for the determination of the artificial endoscopic image. Correspondingly, the training can be carried out per scenario, i.e. for each scenario a respective training data set used for training the respective generative model can be provided. The scenarios preferentially refer to different pathologies.

The anatomical model 2 can also comprise colors for indicating a distance to an entrance into the anatomical model 2. For instance, the colors can form a continuous color gradient for indicating the distance to a raw of teeth of the anatomical model 2. In a preferred embodiment, a respective color indicating a respective anatomical region is formed as a color gradient for indicating the distance.

The current frame of the input, plus earlier frames, may be processed by a number of input units that may output, for instance: (a) classification of the current anatomical region or region complex; (b) the current position along the GI tract as deduced from the color gradient(s); (c) motion blurring, (d) defocus blurring, (e) other parameters which describe the appearance of the input frame. Optionally combined with the user input, this can be used to compute further and complex parameters, e.g., which part of the input frame overlaps with the target position for the selected target lesion, i.e., a binary map which signals which part of the input frame corresponds to the target position, e.g. "28 - 30 cm from row of teeth". As described before, these parameters or a number of them can be inputted to both the generator and a discriminator in the sense of a conditional GAN architecture. Furthermore, the detected region complex may be used to choose one of a number of generators specific for different region complexes.

If applied by the end user, only the generator is used and the discriminator(s) and an optional inverse generator are dropped.

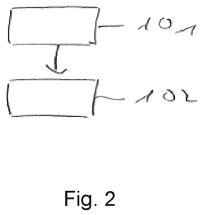

Fig. 2 shows schematically and exemplarily an embodiment of a training method fortraining a person carrying out an endoscopic procedure. In step 101 a generative model is provided, which has been trained with training data sets including real endoscopic images of the inside of an anatomical model and real endoscopic images of the inside of real patients such that the trained generative model provides, as an output, an artificial endoscopic image, if it is provided, as an input, with a real endoscopic image of the inside of the anatomical model. In step 102 an artificial endoscopic image is determined based on a real endoscopic image generated by the endoscope 6 introduced into the anatomical model 2 and the provided generative model.

The anatomical model 2 is real physical model comprising preferentially rubber and/or silicon. The anatomical model 2 preferentially is a gastrointestinal model to be used fortraining the person in gastrointestinal endoscopy. In an embodiment, the anatomical model 2 is a model to be used for training in esophagogastroduodenoscopy, i.e. for training the endoscopic examination of especially esophagus, the stomach and the duodenum. Moreover, in an embodiment the anatomical model is a model to be used for training in colonoscopy. Thus, the anatomical model might also model the rectum and the intestine.

Generally, if, for instance, gastroscopy or colonoscopy examination procedures are trained at anatomical models like anatomical rubber and/or silicon models, this training is limited to exercising simple mechanical operations and the hurdle to a real endoscopic examination of a patient still is very high. This is because in known systems the endoscopic images do not really correspond to endoscopic images of real patients and the scenario generally is the same from training examination to training examination. The training apparatus and training method described above with reference to Figs. 1 and 2, in contrast, allow for an improved training, already because the artificial endoscopic images are closer to endoscopic images of real patients. Moreover, different scenarios like different pathologies can be trained with a same anatomical model. The training apparatus replaces a real endoscopic image of the inside of the anatomical model by a possible endoscopic image of a real patient, i.e. by an artificial endoscopic image generated by the image determination unit. For instance, instead of a silicon esophagus of the anatomical model, which could also be regarded as being a dummy, through which the endoscope is guided, the person sees on the display an image looking more realistic, i.e. the artificial image is shown on the display 5, wherein this artificial image looks more like a realistic image of a real patient in comparison to the real endoscopic image of the inside of the anatomical model and wherein the artificial endoscopic image and the initial real endoscopic image preferentially refer to a same view. The same view preferentially means the same viewing direction and the same field of view.

Thus, since the images are generated and determined over time, while the endoscope is moved within the anatomical model, a video generated by the endoscope and showing the inside of the anatomical model is replaced by a video formed by the artificial endoscopic images determined by the image determination unit 9. In other words, an initial video stream of a first domain being the domain of the real endoscopic images of the inside of the anatomical model is replaced by a corresponding video stream of another domain being the domain defined by the determined artificial endoscopic images. Several of these "other" domains can exist corresponding to, for instance, different scenarios as described above, wherein the "other" domain which could also be regarded as being a target domain, can be varied, especially varied during the procedure, in order to illustrate different scenarios like, for instance, a newly occurred bleeding, or another change of the scenario.

As explained above, different anatomical regions can have different colors. Thus, at least the inner surface of the different anatomical regions can be colored differently. For instance, the mouth cavity can be blue, the larynx can be green, the esophagus can be yellow, the stomach can be red, et cetera. The different anatomical regions hence can have different discrete color markers.

Since, for instance, the gastrointestinal tract is organized sequentially, generally only one or two anatomical regions, or another limited number of anatomical regions, will be shown at the same time in the real endoscopic image of the inside of the anatomical model. By using the colors visible in the real endoscopic image, the one or two anatomical regions can be identified, in order to determine the currently shown region complex. As explained above, the region complexes can be, for instance, a) mouth cavity, b) larynx and esophagus, c) esophagus, d) esophagus and stomach, e) stomach and duodenum and f) duodenum. It is also possible that the anatomical regions are defined differently, in particular finer. In an embodiment it can be distinguished between different regions of the stomach like the fundus of the stomach, the greater curvature of the stomach, the lesser curvature of the stomach, et cetera.

In an embodiment, in which several anatomical regions are shown in a real endoscopic image, the image determination unit can be configured to determine one or several dominant regions and to determine the region complex based on the determined one or several dominant regions. For instance, the real endoscopic image can be segmented into the different anatomical regions, wherein the one or several dominant regions can be determined based on the size of the segmented different anatomical regions. In an embodiment, it can be determined that only a maximum number of anatomical regions should be used for the determination of the region complex, wherein the maximum number of anatomical regions can be determined as the dominating regions, which have the highest sizes, i.e. largest segmented areas, in the real endoscopic image. In an embodiment, the maximum number is two such that the dominating regions are the two anatomical regions occupying the largest areas in the real endoscopic image.

For each region complex several target domains can be defined, which might refer to, for instance, different pathologies. The generative model providing unit can provide different generative models, which are independent of each other and which are specific for a respective region complex, in order to transfer the real endoscopic images of the inside of the anatomical model from the original domain to the respective target domain. This allows to, for instance, combine different pathologies in different regions. For example, it is possible that during the training at the same time Barrett's esophagus and gastric ulcer are present. The possibility to provide scenarios of multiple combined pathologies without the necessity of an individual target domain for any such combination reduces the complexity of the tasks and hence allows for more and more complex scenarios.

The unambiguous color coding of the region complexes simplifies forcing a temporal consistency between different medical rounds of a region in the sense of, for instance, the consistency of the generated larynx images between a) advancing the endoscope at the beginning of the examination and b) retracting the endoscope at the end of the examination. The temporal consistency during the transition between different region complexes and within a same region complex can be enforced by specific temporal discriminators. Upon detection of a formerly visited region through a corresponding preprocessing anatomic region classification module, output frames of the former visit to that region are provided as additional input to the generator and the (temporal) discriminator(s) in order to enhance their respective capability to avoid and detect inconsistency of the region appearances between the current and former visits.

As explained above, a continuous color gradient, which could also be realized as a finely discretized color gradient, within a respective region, or independent of a respective region and throughout the entire gastrointestinal tract, can indicate the distance to, for example, a row of teeth. This allows to place lesions at desired locations virtually in the artificial endoscopic images. For instance, an esophageal ulcer can be placed at a location having a distance of 28 cm to the row of teeth. The respective lesion or another element to be added to the artificial endoscopic images can be coded, for instance, as a vector in a so called latent space of the generative models. In particular, the combination of user input and detected region complex and/or distance from row of teeth can be used to compute further and complex parameters for the conditional GAN, e.g., which part of the input frame overlaps with the target position for the selected target lesion, i.e., a binary map which signals which part of the input frame corresponds to the target position, e.g. "28 - 30 cm from row of teeth"; alternatively, a binary label whether the target lesion could be placed anywhere in the current view can be used.

By using this specifically prepared, colored coded anatomical model, more and more precisely selectable scenarios can be used and it is possible to improve the temporal consistency.

In an embodiment the training data sets, with which the generative model has been trained, also include image sharpness indicators being indicative of a degree of image sharpness of the respect real endoscopic image such that the trained generative model provides, as an output, an artificial endoscopic image, if it is provided, as an input, with a real endoscopic image of the inside of the anatomical model and the image sharpness indicator of the real endoscopic image, wherein the image determination unit 9 is configured to determine an image sharpness indicator of the real endoscopic image and to determine the artificial endoscopic image based on the real endoscopic image generated by the endoscope 6, the determined image sharpness indicator and the provided generative model. This can lead to artificial endoscopic images which are similar to the initial real endoscopic images with respect to the image sharpness. Image sharpness, particular blur, either motion and defocusing blur combined or separately, can be automatically computed by, for instance, either classification networks, regression methods or classical methods and perceptual metrices, or a combination of these.

In an embodiment, selected parameters may, alternatively to being used as a parameter to the conditional generative model, be imposed on the output stream as a postprocessing step, either by classical methods, including optical flow, or by transformation of another generative model trained for that selective purpose.

In an embodiment, pre- and postprocessing may include down- and upsamling, respectively, of the respective input and output video stream, either by classical methods or generative models trained for that selective purpose.

The transfer from the original domain to the respective target domain carried out by using the respective generative model can also be regarded as being a style transfer.

Although in the embodiment described above with reference to Fig. 1 the image generation apparatus is separated from the endoscope supply unit 4, it is also possible that both units are integrated. In particular, the image generation apparatus 7 can be integrated in an endoscope supply unit, especially in an endoscope tower.

Other variations to the disclosed embodiments can be understood and effected by those skilled in the art in practicing the claimed invention, from a study of the drawings, the disclosure, and the appended claims.

In the claims, the word "comprising" does not exclude other elements or steps, and the indefinite article "a" or "an" does not exclude a plurality.

A single unit or device may fulfill the functions of several items recited in the claims. The mere fact that certain measures are recited in mutually different dependent claims does not indicate that a combination of these measures cannot be used to advantage.

Procedures like the provision of the generative models, the determination of the artificial endoscopic images, et cetera performed by one or several units or devices can be performed by any other number of units or devices. The procedures and/or the control of the training apparatus in accordance with the training method can be implemented as program code means of a computer program and/or as dedicated hardware.

A computer program may be stored/distributed on a suitable medium, such as an optical storage medium or a solid-state medium, supplied together with or as part of other hardware, but may also be distributed in other forms, such as via the Internet or other wired or wireless telecommunication systems.

Any reference signs in the claims should not be construed as limiting the scope.

The invention relates to a training system for training a person in carrying out an endoscopic procedure. An endoscope is introduced into an anatomical model and configured to generate a real endoscopic image of the inside of the anatomical model. An image generation apparatus, which generates an artificial endoscopic image, comprises provides a) a generative model which has been trained with training data sets including real endoscopic images of the inside of the anatomical model and real endoscopic images of the inside of real patients such that the trained generative model provides, as an output, an artificial endoscopic image, if it is provided, as an input, with a real endoscopic image of the inside of the anatomical model, and b) determines an artificial endoscopic image based on a real endoscopic image generated by the endoscope and the generative model, which is shown on a display.

## Claims

1. A training system for training a person in carrying out an endoscopic procedure, the training system (1) comprising:
- an anatomical model (2) in which an endoscope (6) is introducible,
- an endoscope (6) to be introduced into the anatomical model (2) and configured to generate a real endoscopic image of the inside of the anatomical model,
- an image generation apparatus (7) configured to generate an artificial endoscopic image, the image generation apparatus (7) comprising:
- a generative model providing unit (8) for providing a generative model which has been trained with training data sets including real endoscopic images of the inside of the anatomical model and real endoscopic images of the inside of real patients such that the trained generative model provides, as an output, an artificial endoscopic image, if it is provided, as an input, with a real endoscopic image of the inside of the anatomical model,
- an image determination unit (9) configured to determine an artificial endoscopic image based on a real endoscopic image generated by the endoscope (6) and the provided generative model,
- a display (5) configured to show the determined artificial endoscopic image to the person.

2. The training system as defined by claim 1, wherein the generative model providing unit (8) is configured to use a generative model that has been trained as a generator of a generative adversarial network (GAN), wherein the generative adversarial network uses, besides the generator, one or several discriminators.

3. The training system as defined by claim 2, wherein the one or several discriminators include at least one temporal discriminator.

4. The training system as defined by any of the preceding claims, wherein the generative model providing unit (8) is configured to use different generative models for different region complexes within the anatomical model (2) such that, if the real endoscopic image shows a certain region complex of the anatomical model (2), the image determination unit (9) uses the generative model, which corresponds to the certain region complex, for the determination of the artificial endoscopic image.

5. The training system as defined by any of the preceding claims, wherein the generative model providing unit (8) is configured to use different generative models for different scenarios to be shown in the determined artificial endoscopic image, wherein the image generation apparatus (7) further comprises a user interface (10) allowing a user to choose a desired scenario, wherein the image determination unit (9) is configured to use the generative model, which corresponds to the selected scenario, for the determination of the artificial endoscopic image.

6. The training system as defined by any of the preceding claims, wherein the training data sets, with which the generative model has been trained, also include image sharpness indicators being indicative of a degree of image sharpness of the respect real endoscopic image such that the trained generative model provides, as an output, an artificial endoscopic image, if it is provided, as an input, with a real endoscopic image of the inside of the anatomical model and the image sharpness indicator of the real endoscopic image, wherein the image determination unit (9) is configured to determine an image sharpness indicator of the real endoscopic image and to determine the artificial endoscopic image based on the real endoscopic image generated by the endoscope (6), the determined image sharpness indicator and the provided generative model.

7. The training system as defined by any of the preceding claims, wherein the anatomical model (2) comprises different colors for indicating different anatomical regions.

8. The training system as defined by any of the preceding claims, wherein the anatomical model (2) comprises colors for indicating a distance to an entrance into the anatomical model (2).

9. The training system as defined by claim 8, wherein the colors form a continuous color gradient for indicating the distance.

10. The training system as defined by claims 7 and 9, wherein a respective color indicating a respective anatomical region is formed as a color gradient for indicating the distance.

11. An image generation apparatus configured to generate an artificial endoscopic image and to be used together with an anatomical model (2) as defined by claim 12 and an endoscope (6) for forming a training system as defined by claim 1, the image generation apparatus (7) comprising:
- a generative model providing unit (8) for providing a generative model which has been trained with training data sets including real endoscopic images of the inside of the anatomical model and real endoscopic images of the inside of real patients such that the trained generative model provides, as an output, an artificial endoscopic image, if it is provided, as an input, with a real endoscopic image of the inside of the anatomical model, and
- an image determination unit (9) configured to determine an artificial endoscopic image based on a real endoscopic image generated by the endoscope (6) and the provided generative model.

12. A machine learning apparatus for training a generative model to be used by the training system of claim 1 and the image generation apparatus as defined by claim 11, wherein the machine learning apparatus is configured to use a generator and a discriminator for the training, wherein the generative model to be trained is used as the generator.

13. An anatomical model in which an endoscope (6) is introducible and which is configured to be used together with an image generation apparatus (7) as defined by claim 11 for forming a training system as defined by claim 1.

14. A training method for training a person in carrying out an endoscopic procedure, the training method comprising:
- providing a generative model which has been trained with training data sets including real endoscopic images of the inside of an anatomical model and real endoscopic images of the inside of real patients such that the trained generative model provides, as an output, an artificial endoscopic image, if it is provided, as an input, with a real endoscopic image of the inside of the anatomical model, by a generative model providing unit (8),
- determining an artificial endoscopic image based on a real endoscopic image generated by an endoscope (6) introduced into an anatomical model and the provided generative model by an image determination unit (9).

15. A training computer program for training a person in carrying out an endoscopic procedure, the training computer program comprising program code means configured to cause an image generation apparatus (7) as defined by claim 11 to carry out the training method as defined by claim 14, if the training computer program is run on the image generation apparatus (7).
